# EUROPÄISCHE PATENTSCHRIFT

(11) **EP 2 393 181 B1**
(45) Veröffentlichungstag und Bekanntmachung des Hinweises auf die Patenterteilung: **04.09.2019**
(21) Anmeldenummer: 10005752.0
(22) Anmeldetag: 02.06.2010
(51) Int. Cl.: H02J 50/12, H02J 7/02

(54) **Schaltung für ein System zur kontaklosen, induktiven Energieübertragung**
Circuit for a system for a contactless, inductive energy transfer
Commutation pour un système de transmission d'énergie sans contact et inductif

(43) Veröffentlichungstag der Anmeldung: 07.12.2011
(73) Patentinhaber: FRIWO Gerätebau GmbH, 48346 Ostbevern (DE); Friedrich-Alexander-Universität Erlangen-Nürnberg, 91054 Erlangen (DE)
(72) Erfinder: Bucher, Alexander, 80482 Nürnberg (DE); Dürbaum, Thomas, 91083 Baiersdorf (DE)
(74) Vertreter: Grünecker Patent- und Rechtsanwälte PartG mbB

(56) Entgegenhaltungen:
- EP-A1- 1 744 443
- EP-A2- 1 221 753
- EP-A2- 1 780 862
- WO-A1-2006/101285
- WO-A1-2007/012272
- US-A1- 2003 227 364
- US-A1- 2008 224 544

## Beschreibung

Die vorliegende Erfindung bezieht sich auf eine Schaltung für ein System zur kontaktlosen, induktiven Energieübertragung, insbesondere zur Anwendung bei der Energieversorgung mobiler Geräte sowie auf eine zugehörige Ladeschaltung.

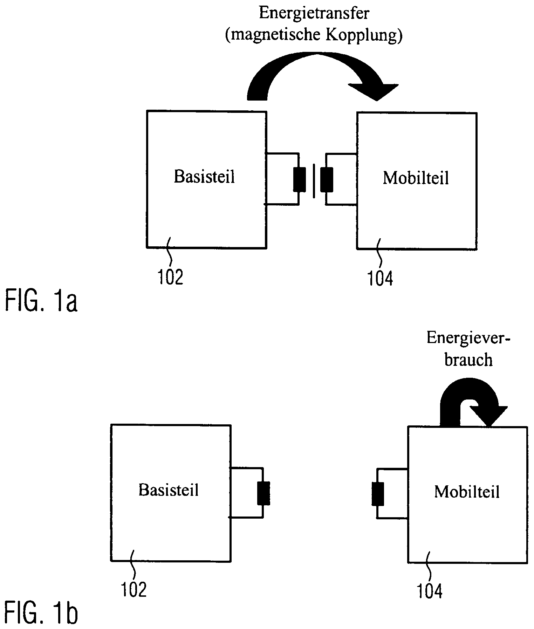

Das Prinzip der induktiven Energieübertragung dient in einer Vielzahl von Applikationen als physikalische Grundlage zur technischen Erschließung eines weiten Applikationsbereichs. Die prinzipielle Unterteilung eines Systems zur induktiven Energieübertragung ist in Fig. 1 dargestellt. Kernbestandteil im Falle der kontaktlosen, induktiven Energieübertragung ist ein lose gekoppelter Übertrager, welcher die magnetische Kopplung einer Spule im Basisteil 102 mit einer Spule im Mobilteil 104 auf schaltungstechnischer Ebene repräsentiert. Im Betriebszustand der Fig. 1(a) erfolgt der Energietransfer zwischen Basis- und Mobilteil. Diese Energie kann einerseits dazu verwendet werden, um die Funktionalität des Mobilteils zu ermöglichen, andererseits kann sie in Akkumulatoren (für moderne Anwendungen meist Li-Ionen Akkus, es sind aber auch andere Akkutypen wie z. B. Blei-, NiCd-, NiMh-Typen etc. einsetzbar) zwischengespeichert werden. Wird das Mobilteil 104 wie in Fig. 1(b) gezeigt von der Basisstation 102 entfernt, so wird der Energietransfer unterbrochen. Das Mobilteil 104 wird dann aus dem zuvor geladenen internen Energiespeicher versorgt oder verweilt in einem inaktiven Zustand bis zum nächsten Kontakt mit dem Basisteil 102.

Durch die räumliche Anordnung des Mobilteils 104 in der Nähe des Basisteils 102 wird der Energietransfer zwischen Basis- und Mobilteil ermöglicht. Als bekanntestes Beispiel eines solchen induktiven Ladesystems ist die elektrische Zahnbürste zu nennen, welche das Laden der Zahnbürste als Mobilteil 104 ohne galvanische Verbindung ermöglicht.

Der Verzicht auf galvanische Leitungen ist für eine große Zahl an Anwendungsszenarien von sehr großer Bedeutung. Insbesondere trifft dies auf Anwendungen mit hohen Ansprüchen an den mechanischen Aufbau der elektrischen Verbindungen zwischen Leistungsquelle und -senke zu, bei denen technisch komplexe Stecker und Kabel durch die Verwendung der induktiven Energieübertragung (IE) vermieden werden können. Darüber hinaus können technische Energieversorgungssystemkomponenten basierend auf IE vor Umwelteinflüssen geschützt werden, ohne dass herausgeführte Steckverbinder den mechanischen Aufbau unnötig kompliziert machen. Überdies existieren Einsatzgebiete der IE, bei denen der Einsatz von galvanischen Verbindungen im Hinblick auf eine technische Realisierbarkeit vermieden werden muss, z. B. in explosionsgefährdeten Umgebungen oder beim Betrieb der Systemkomponenten in leitfähigen und/oder aggressiven Medien. Ferner kann der Einsatz der IE die Zuverlässigkeit technischer Systeme erhöhen. Dies ist zum einen bei Systemen mit rotierenden oder beweglichen Teilen der Fall, da dort auf verschleißanfällige Schleifkontakte verzichtet werden kann, zum anderen bei Geräten mit Steckverbindern, die ansonsten für eine hohe Anzahl an Steckspielen ausgelegt werden müssten.

Im Zusammenhang mit der zunehmenden Marktdurchdringung technischer Lösungen basierend auf dem Prinzip der IE muss auch der Aspekt der Nutzerfreundlichkeit hervorgehoben werden. Insbesondere im Bereich tragbarer elektrischer Leistungssenken wird dieser Mehrwert für den Nutzer durch die vereinfachte Handhabung deutlich, der die Versorgung dieser tragbaren Geräte einzig durch Platzierung des Mobilteils an der Ladestation initiieren kann.

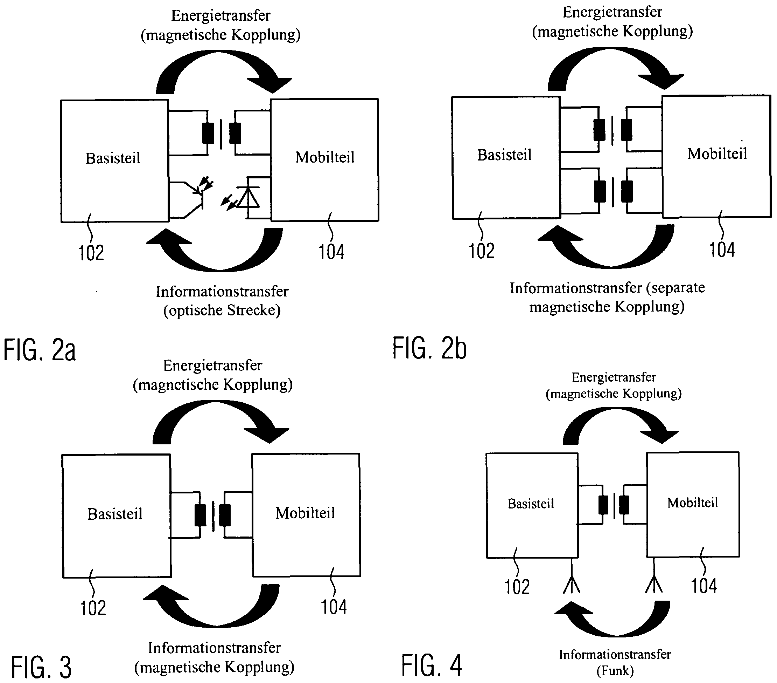

Der aktuelle Stand der Technik beinhaltet bei der Anwendung der IE meist eine Signalrückführung zwischen Leistungssenke und -quelle, wodurch der aktuelle elektrische Zustand der galvanisch getrennten Sekundärseite auf der Primärseite in irgendeiner Form bekannt ist. Diese Information wird auf der Primärseite dazu benutzt, durch die Veränderung einer Stellgröße (Schaltfrequenz, Tastgrad, etc.) auf der Primärseite auf eine Veränderung der sekundärseitigen Last zu reagieren. Dieser technische Ansatz erfordert die Bereitstellung eines Kanals zur Übertragung dieser Informationen. Bekannte technische Realisierungen, z.B. DE 3902618 A1, DE 101 58 794 B4, US 6 912 137 B2 benutzen für diese Signalrückführung einen separaten physikalischen Kanal, wie dies in Fig. 2 dargestellt ist.

Aus aufbautechnischen Gesichtspunkten heraus ist diese Herangehensweise aufwändig, da sowohl konstruktive Einschränkungen in Kauf genommen werden müssen (Ausrichtung des Mobilteils zum Basisteil kann nur sehr eingeschränkt erfolgen, im Falle der optischen Strecke ist das Herausführen von optischen Bauelementen oder Lichtleitern bzw. Verwendung transparenter Materialien erforderlich, im Falle der separaten magnetischen Kopplung ist ein zweites Spulenpaar unterzubringen) als auch zusätzlicher Bauteil- und Schaltungsaufwand entstehen.

Die WO 2006/101285 A1 offenbart ein kontaktloses Batterieladegerät, bei dem die Primärseite und die Sekundärseite voneinander getrennt werden können, wobei die Übertragungsstufe mit galvanischer Trennung einen Serienresonanzkonverter 120 aufweist. Weiterhin ist auf der Sekundärseite eine Ladesteuerschaltung vorgesehen, die die Ladung auf der Sekundärseite überwacht. Weiterhin ist ein Temperaturerfassungsschaltkreis 183 vorgesehen, der die CPU 180 mit Informationen von der Sekundärseite versorgt, und es ist in der Beschreibung auf Seite 8, Absatz [56] ausgeführt, dass eine RFID-Steuereinheit vorgesehen ist, die in der Lage ist, Ladezustandsinformation von der Batterie an die Primärseite zu übertragen (siehe auch Absatz [57] auf Seite 9).

Die EP 1221753 A2 bezieht sich auf ein kontaktloses Batterieladegerät mit einem superdünnen PCB-Transformator. Wie aus der Figur 4 zusammen mit Figur 5 dieser Druckschrift hervorgeht, ist ein Steuer- und Überwachungsschaltkreis 360 auf der Sekundärseite des Ladegeräts angeordnet. Der Ladeschaltkreis 320 bereitet die Eingangsspannung auf der Sekundärseite so auf, dass sie an die Lithiumionen-Batterie eingespeist werden kann. Weiterhin misst die sekundärseitige Steuer- und Überwachungsschaltung 360 den Strom bzw. die Spannung der Batterie und steuert auf diese Weise die Ladeschaltung 320.

Die EP 1780862 A2 bezieht sich auf ein induktives Leistungsversorgungssystem zum Einspeisen von Leistung in eine Vielzahl von Lasten. Dabei ist ein hoher technischer Aufwand in Form von vielfachen sekundärseitigen Leistungskonvertern zum Versorgen der Lasten erforderlich. Diverse Kerngeometrien und deren Bewicklung sind außerdem Gegenstand dieser Druckschrift.

Die EP 1744443 A1 bezieht sich auf eine kontaktlose induktive Leistungsversorgung mittels Induktionsleitungen. Dabei sind mehrere Sekundärseiten vorgesehen, die aber nicht ortsfest sind. Wie aus Figur 4 dieser Druckschrift ersichtlich, werden die primärseitigen Ansteuersignale aktiv durch eine sekundärseitige Rückführung beeinflusst.

Die WO 2007/012272 A1 bezieht sich auf eine Batterieladeschaltung mit einer planaren induktiven Ladeplattform. Wie beispielsweise aus der Figur 19 dieser Druckschrift hervorgeht, enthalten die sekundärseitigen Schaltungen der elektronischen Geräte 1 und 2 jeweils Spannungsregler, die der jeweiligen Batterie vorgeschaltet sind.

Die US 2008/224544 A1 bezieht sich auf eine Leistungsversorgung, bei der eine primärseitige Spuleneinheit und eine sekundärseitige Spuleneinheit induktiv miteinander gekoppelt sind, wobei die sekundärseitige Spuleneinheit mit einer Glättungs- und Gleichrichtungseinheit sowie einer Rückstrombegrenzungseinheit verbunden ist. Ein primärseitiger Regler ist vorgesehen, der, wie in den Absätzen [34], [35] und [72] beschrieben, gleichzeitig auch mit einer Informationsbereitstellungseinheit 14 verbunden ist.

Die US 2003/227364 A1 bezieht sich auf eine Batterieladevorrichtung für ein tragbares elektronisches Gerät, bei dem mehrere parallel geschaltete Transformatoren innerhalb eines Systems zur induktiven Energieübertragung verwendet werden. Diese Vorgehensweise hat zum Ziel, Vorteile bei der thermischen Auslegung der Spulen im Vergleich zu einem System mit nur einem lose gekoppelten Transformator auszunützen.

Alternative Ansätze verwenden für die Signalrückführung die gleiche magnetische Kopplung wie für den Energietransport selbst (EP 288791 B1, EP 982831 A2). Dieser Ansatz ist in Fig. 3 dargestellt.

Diese bekannte Art der Rückkopplung ist im Hinblick auf die Auslegung der primär- und sekundärseitigen Wicklungen als nachteilig anzusehen, da diese neben dem Energietransport auch für die Übermittlung der Signalinformation ausgelegt werden müssen.

Eine weitere Alternativlösung besteht in der Verwendung von funkgestützten Lösungen (z. B. US 6436299 B1) basierend auf der Ausbreitung von elektromagnetischen Wellen. Fig. 4 illustriert diese Möglichkeit.

Auch diese technische Lösung stellt einen deutlich erhöhten technisch-konstruktiven Aufwand dar. Die für die Bereitstellung des Funkkanals nötigen Komponenten müssen einerseits passend in den Gerätehälften untergebracht werden, insbesondere die Antennen sind passend zueinander zu platzieren. Dadurch ergeben sich beim Betrieb Einschränkungen im Hinblick auf die Ausrichtung der Gerätehälften zueinander. Darüber hinaus erhöht die nachrichtentechnische Aufbereitung des Funksignals den schaltungstechnischen Aufwand.

Steht ein Kanal zum Informationsaustausch zwischen Basis- und Mobilteil bereit, so kommen in bestehenden technischen Lösungen unterschiedliche Modulationsverfahren (FM, AM etc.) zum Einsatz. Diese nachrichtentechnische Aufbereitung hat unabhängig von der Art des verwendeten Kanals einen stark erhöhten Anspruch an die technische Realisierung des Systems zur Folge. Dies ist ein zusätzlicher schwerwiegender Nachteil bekannter Lösungen basierend auf der Rückführung eines Signals.

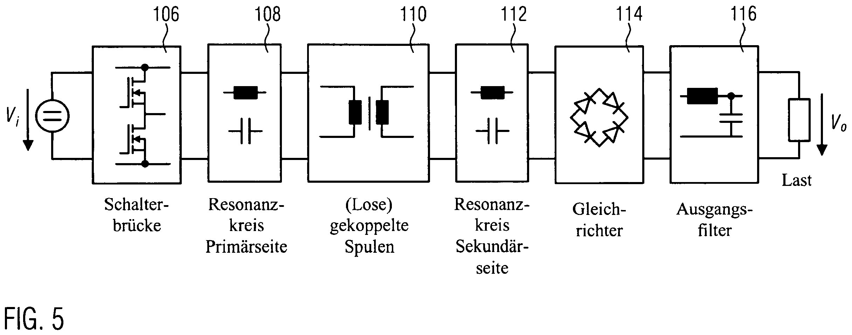

Der prinzipielle Aufbau des Leistungsteils eines Systems zur IE auf Basis eines resonanten DC-DC-Konverters ist in Fig. 5 dargestellt. Dieser Konvertertyp ist im Zusammenhang mit der induktiven Energieübertragung als Stand der Technik zu bezeichnen. Daneben sind auch noch andere Konvertertypen auf Basis eines Transformators denkbar (Flyback, Forward, Cuk, asymmetrische Halbbrücke etc.). Die Eingangsspannung *Vᵢ* wird durch eine Schalterbrücke 106 in eine hochfrequente Wechselspannung zerhackt. Diese Schalterbrücke 106 kann aus einer Voll- bzw. Halbbrücke bestehen, wobei Halbleiterschalter als aktive Bauelemente zum Einsatz kommen. Diese Wechselspannung wird an die Primärseite des lose gekoppelten Transformators 110 gelegt. Zur Kompensation der vergleichsweise großen Blindelemente des Transformators werden auf der Primär- und auf der Sekundärseite weitere Blindelemente vorgesehen, die schematisch als Resonanzkreise 108 und 112 dargestellt sind. In der Regel wird auf der Primärseite eine Serienkapazität eingefügt, es können aber auch mehrere Blindelemente zur gezielten Beeinflussung der Frequenzeigenschaften des Primärkreises vorgesehen werden.

Auf der Sekundärseite kann auf den Einsatz zusätzlicher Blindelemente verzichtet werden (LLC), es können aber auch Kapazitäten zur Kompensation der Hauptinduktivität des Übertragers eingesetzt werden (LLCC), sowohl in Parallel- als auch in Serienschaltung. Darüber hinaus ist auch der Einsatz von zusätzlichen Blindelementen möglich, wiederum zur gezielten Beeinflussung der Frequenzeigenschaften der Sekundärseite.

Der Sekundärstrom wird auf der Ausgangsseite gleichgerichtet. Die Gleichrichtung 114 kann als Vollweg- oder Halbweggleichrichtung ausgeführt sein, als Bauelemente können sowohl reguläre Dioden als auch Halbleiterschalter eingesetzt werden (Synchrongleichrichtung). Der gleichgerichtete Ausgangsstrom wird mit Hilfe eines Filters 116 (Induktivität optional) geglättet.

Der aktuelle Stand der Technik nutzt ein zurückgeführtes Signal zur Realisierung eines Soll-Ist-Wert-Vergleichs um z. B. im Falle des resonanten Konverters die Schaltfrequenz als Stellgröße des geregelten Systems nachzuführen.

Es existieren aber auch technische Ansätze, die den Verzicht der Signalrückführung im Falle resonanter Konverter durch eine eingeschränkte Wahl des Arbeitspunktes ermöglichen sollen. Diese basieren auf der Festlegung der Schaltfrequenz auf einen festen Wert. Um bei diesen Ansätzen die Variation der Ausgangsspannung bei unterschiedlichen Kopplungsverhältnissen zu begrenzen, wird der Betrieb am so genannten "coupling independent point" vorgeschlagen, einem Arbeitspunkt, bei dem sich bei gleicher resistiver Belastung des Ausgangs in etwa die gleiche Ausgangsspannung einstellt.

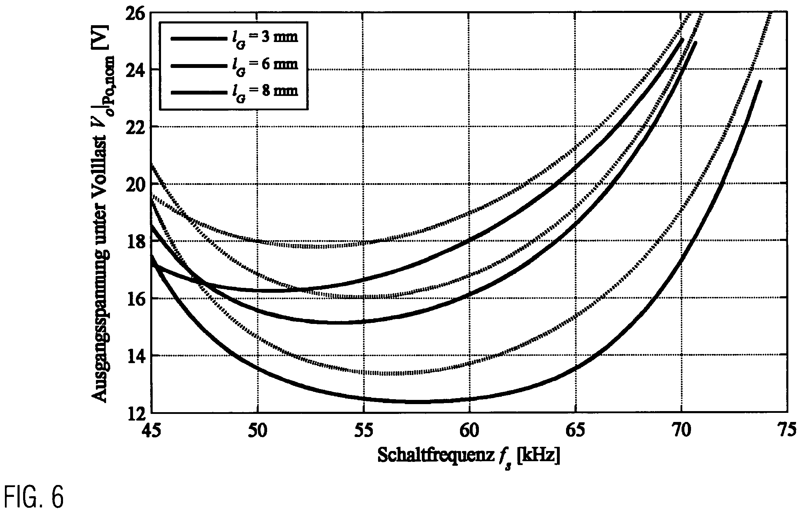

Oftmals basieren diese ermittelten ausgezeichneten Arbeitspunkte auf vereinfachten Berechnungsmethoden. Analysiert man hingegen die sich einstellende Ausgangsspannung unter Belastung für verschiedene Abstände eines Systems zur IE genauer, so erhält man die in Fig. 6 gezeigten charakteristischen Verläufe. Hierbei wurde für jede Schaltfrequenz einer Halbbrücke die sich einstellende Ausgangsspannung unter Belastung der Ausgangsspannung mit der Nennausgangsleistung des Systems ermittelt. Zusätzlich ist die Leerlaufspannung gestrichelt eingezeichnet.

Wie aus diesen Verläufen ersichtlich wird, ist diese charakteristische Eigenschaft eines kopplungsunabhängigen Punktes für das dargestellte, exemplarisch ausgewählte System zwar nachvollziehbar (Wahl der Schaltfrequenz bei *fₛ* ≈ 48 kHz für *I_{G}* = 3 und *I_{G}* = 6 mm), in einem praktischen System aber nur unter sehr starken Einschränkungen nutzbar. So ist direkt ersichtlich, dass für schlechte Kopplungsverhältnisse, im gewählten Beispiel für *I_{G}* = 8 mm, die Eigenschaft einer möglichst konstanten Ausgangsspannung verloren geht. Darüber hinaus ergibt sich zwangsläufig eine Variation des Ausgangsspannungswertes, wenn der Ausgang mit einer von der Nennleistung verschiedenen Leistung belastet wird, insbesondere im Falle des Leerlaufs, der bei fast jeder Applikation vorkommt.

Durch die Verwendung der in den Ansprüchen beschriebenen erfindungsgemäßen Idee werden mehrere Probleme im Hinblick auf die technische Realisierung eines Systems zur IE beseitigt. Bei Verwendung eines Rückführsignals muss der zugehörige Signalpfad entweder separat realisiert oder mit großem Einfluss auf die Auslegung der magnetischen Kopplung im Hauptenergieflusspfad integriert werden. Beide Lösungen haben deutlich erhöhten technischen Aufwand zur Folge. Bei Verwendung der hier beschriebenen Idee kann somit durch den Verzicht auf eine Signalrückführung für eine bestmögliche mechanische und elektrische Auslegung des Gesamtsystems im Hinblick auf die Energieübertragung gesorgt werden.

Ein weiteres technisches Problem ergibt sich aus der Ausnutzung des kopplungsunabhängigen Arbeitspunktes. Zum einen lässt sich für das gewählte Beispiel aus Fig. 6 im Bereich zwischen 45 und 50 kHz zwar ein Bereich mit einem Schnittpunkt der Ausgangsspannung für die Abstände *I_{G}* = 3 mm und *I_{G}* = 6 mm ausmachen. Sobald der Abstand aber vergrößert wird, verschlechtert sich die magnetische Kopplung derart, dass die Kopplungsunabhängigkeit verlorengeht. Dies gilt prinzipiell für jedes System der IE.

Zum anderen stellt sich bei Veränderung der Ausgangslast ebenfalls eine Änderung der Ausgangsspannung ein, falls die Schaltfrequenz als fixer Wert gewählt wird, wie aus dem Schnittpunkt der gestrichelten Verläufe aus Fig. 6 hervorgeht. Dementsprechend ist dieser spezielle Arbeitspunkt unter dem Gesichtspunkt einer möglichst konstanten Ausgangsspannung nur sehr eingeschränkt nutzbar. Insbesondere ist somit eine direkte Versorgung empfindlicher Lasten mit sehr engem Wertebereich der zulässigen Lastspannung bei fixer Wahl der Schaltfrequenz unmöglich.

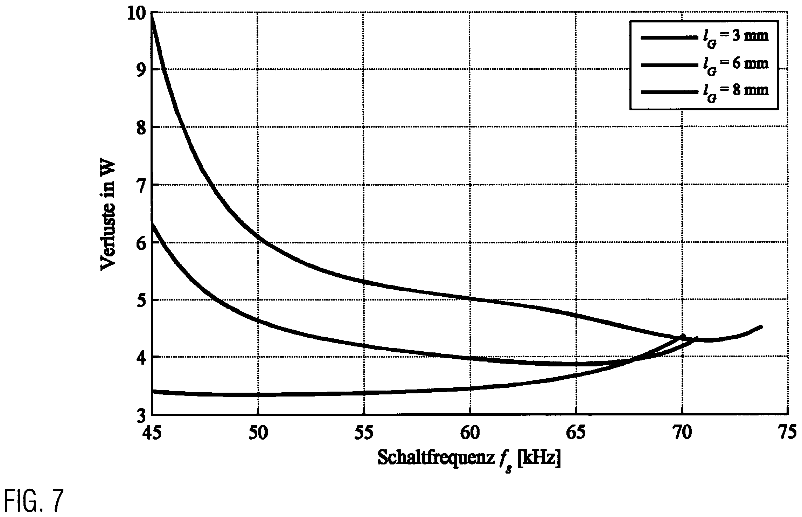

Betrachtet man neben der Ausgangsspannungsvariation einen weiteren wichtigen Gesichtspunkt eines festfrequent betriebenen Systems zur IE, nämlich die auftretenden Verluste aus Fig. 7, so stellt man fest, dass die Festlegung der Arbeitsfrequenz im linken Bereich aus Fig. 6 nachteilig ist. Die Variation der auftretenden Verluste in Abhängigkeit des Abstandes ist im Bereich der geringen Spannungsvariation (dem kopplungsunabhängigen Punkt) am größten.

Dementsprechend reagiert der Wirkungsgrad des Systems zur IE in diesem Bereich sehr sensitiv auf Abstandsvariationen. Somit ist die Positionierung bei Systemen mit Ausnutzung des kopplungsunabhängigen Punktes stark eingeschränkt und es muss unter Wirkungsgradaspekten darauf geachtet werden, dass keine allzu großen Abstandsvariationen vom Nennabstand möglich sind.

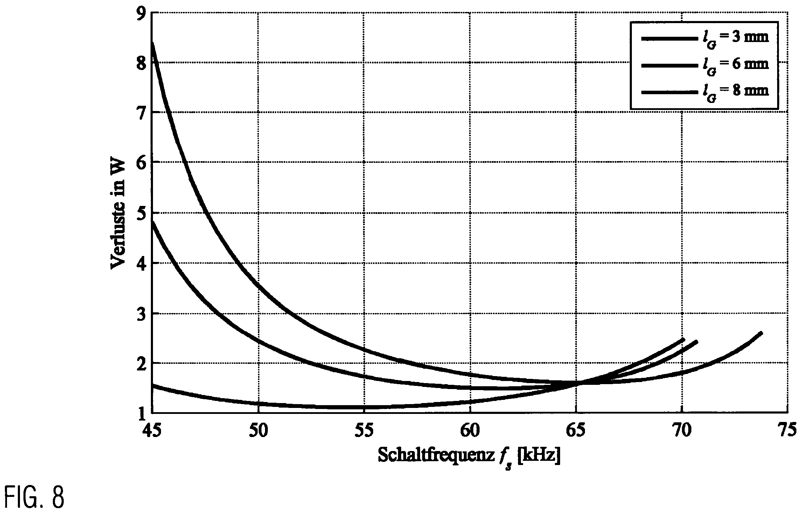

Wird hingegen eine Schaltfrequenz im Bereich der Aufsteilung zur Parallelresonanzfrequenz (für dieses exemplarisch gewählte Beispiel bei 65 ... 70 kHz) hin gewählt, so ergeben sich mehrere Vorteile im Hinblick auf die Verlustleistungsentwicklung. Zum einen ist der Absolutwert der auftretenden Verlustleistung in diesem Bereich für die großen Abstände des gezeigten Beispiels am kleinsten. Zum anderen ist die Variation des Wirkungsgrades in diesem Bereich signifikant kleiner. Für die Teillasteffizienz verstärkt sich dieser Effekt nochmals, wie aus Fig. 8 bei einer Belastung des Ausgangs mit 20% der Nennleistung hervorgeht.

Durch die Einschränkung der möglichen Schaltfrequenz auf die spezielle Lage des kopplungsunabhängigen Arbeitspunktes ergeben sich somit erhebliche Einschränkungen im Hinblick auf die Leistungsfähigkeit des Gesamtsystems, die bei Verwendung der vorliegenden Erfindung aufgehoben werden. Die Ausnutzung des kopplungsunabhängigen Arbeitspunktes hat nichtsdestotrotz eine inhärente Variation der Ausgangsspannung zur Folge. Dieses Vorhandensein einer gewissen Schwankungsbreite der Ausgangsspannung der resonanten Stufe erfüllt die Anforderungen an die notwendige Stabilität der Ausgangsspannung für die Versorgung moderner leistungselektronischer Lasten nicht. Somit ist die Ausnutzung des "coupling indepedent point" nur bei einer sehr eingeschränkten Klasse von Energieverbrauchern auf der Sekundärseite möglich. Bei modernen Anwendungsszenarien wird dagegen selbst bei Verwendung dieses ausgezeichneten Arbeitspunktes die Spannungsvariation der Versorgungsspannung dieser Lasten unzulässig groß. Nicht zuletzt bei Ladeapplikationen basierend auf Li-Ionen-Technik muss dieser Variation aber Rechnung getragen werden.

Daher basiert die vorliegende Erfindung auf der Idee, auf eine Signalrückführung zu verzichten, indem die Forderung einer stabilisierten Ausgangsspannung fallengelassen wird. Die resonante Stufe wird dabei festfrequent betrieben, wobei die Wahl der Schaltfrequenz im Gegensatz zu bisher bekannten Ansätzen prinzipiell beliebig erfolgen kann. Im Hinblick auf minimale Verluste gibt es aber für diesen Parameter ein ausgezeichnetes Optimum, siehe hierzu auch die obigen Ausführungen. Die freie Wahl der Schaltfrequenz vereinfacht daher den Aufbau der resonanten Wandlerstufe erheblich. Überdies ermöglicht dieser Ansatz eine gezielte optimale Auslegung dieser Stufe.

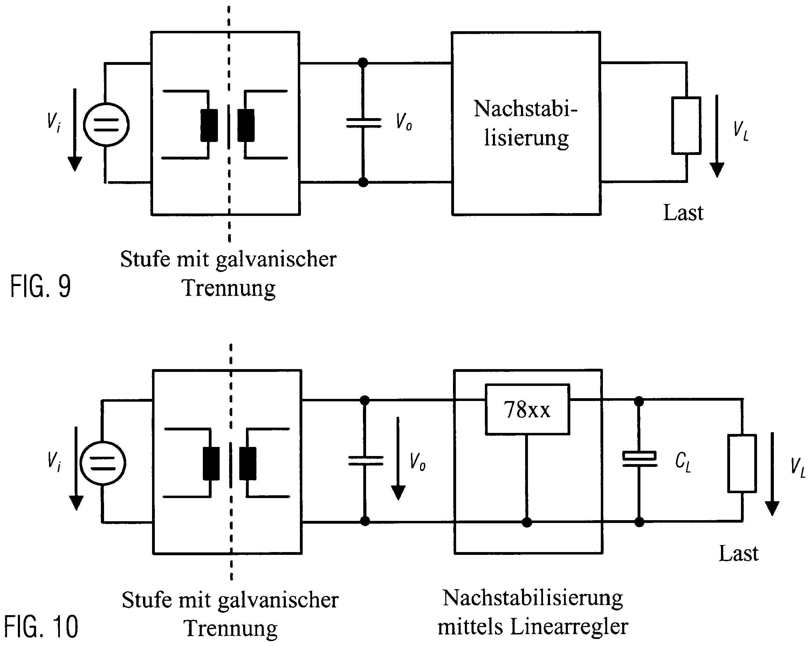

Damit trotzdem empfindliche Lasten auf der Sekundärseite versorgt werden können, schlägt die vorliegende Erfindung eine Erweiterung auf ein dreistufiges Konzept vor. Dabei dient die dritte Stufe der Aufbereitung der sekundärseitigen Ausgangsspannung *Vₒ*. Das Blockschaltbild einer solchen Nachstabilisierung ist beispielweise in Fig. 9 dargestellt.

Die vorliegende Erfindung ermöglicht in vorteilhafter Weise, komplett auf eine gesonderte Signalrückführung zu verzichten, um den Aufbau der magnetischen Kopplung zwischen Primär- und Sekundärseite technisch so einfach wie möglich zu gestalten. Somit kann die Auslegung mit größtmöglicher Priorität auf die Energieübertragung erfolgen und es müssen keine technischen Kompromisse eingegangen oder aufwändige Demodulationsschaltungen berücksichtigt werden.

Aus der Dissertation Schwalbe, Ulf: *"*Vergleichende Untersuchungen dreistufiger Schaltnetzteiltopologien im Ausgangsleistungsbereich bis 3 kW". Dissertation. TU Ilmenau. Sep. 2009, ist bekannt, mehrstufige Topologien bei Schaltnetzteilen mit festgekoppelten Transformatoren einzusetzen.

Der in dieser Dissertation diskutierte Ansatz eines dreistufigen Schaltnetzteils verfolgt den Ansatz, Probleme bei der Auslegung eines klassischen Schaltnetzteils (SNT) mit zwei Stufen durch Hinzunahme einer dritten Stufe zu überwinden. Hierbei wird insbesondere der Zusammenhang zwischen der Größe des Zwischenkreis-Elektrolytkondensators für die Einhaltung einer gewissen Verweilzeit und dem nötigen Eingangsspannungsbereich der DC-DC Stufe betrachtet. Darüber hinaus ist es im Allgemeinen für die Effizienz eines DC-DC-Konverters eher von Nachteil, wenn dieser einen hohen Eingangsspannungsbereich abdecken muss, da diese Anforderung weitreichende Einschränkungen bei dessen Auslegung mit sich bringt.

Im Gegensatz zu der vorliegenden Problemstellung findet der resonante LLC-Konverter nur zur Sicherstellung des ZVS-Betriebs des so genannten *"electronic transformers"* Verwendung. Bei der Applikation der induktiven Energieübertragung hingegen kommt kein klassischer Transformator zum Einsatz, bei dem der Luftspalt zwischen quasi Null und einem Maximalwert fest eingestellt werden kann. Vielmehr handelt es sich um lose gekoppelte Spulen, welche nur bis auf einen Minimalabstand angenähert werden können. Dieser ist nicht auf einen beliebig kleinen Wert einstellbar. Dementsprechend hat man als Entwickler eines Systems zur induktiven Energieübertragung systembedingt mit einer, selbst unter Optimalbedingungen, sehr niedrigen Magnetisierungsinduktivität *Lₘ* sowie einer sehr hohen Streuinduktivität *Lᵣₑₛ* zu kämpfen. Überdies ergeben sich durch mechanische Toleranzen bei der Herstellung der Geräteteile sowie bei deren Positionierung zueinander variable Abstände selbst im Betrieb, während der Luftspalt aus der Dissertation Schwalbe einen fixen Wert darstellt, welcher in der Designphase gezielt gewählt werden kann. Für die Applikation der induktiven Energieübertragung hat dies zur Folge, dass nur Topologien sinnvoll einsetzbar sind, welche mit stark variierenden Zuständen der losen magnetischen Kopplung zurecht kommen. Eine solche Topologie ist z. B. der resonante LLCC-Konverter.

Die vorliegende Erfindung schlägt daher eine Schaltung gemäß Anspruch 1 für ein System zur kontaktlosen, induktiven Energieübertragung vor, insbesondere zur Anwendung bei der Energieversorgung mobiler Geräte.

Zum besseren Verständnis der vorliegenden Erfindung werden im Folgenden technische Aspekte induktiver Energieübertragungssysteme beschrieben. Die Erfindung ist einzig durch die Ansprüche definiert. Dabei werden gleiche Teile mit gleichen Bezugszeichen und gleichen Bauteilbezeichnungen versehen.

Es zeigen:
- **Fig. 1**: eine schematische Darstellung der prinzipiellen Unterteilung eines Systems zur induktiven Energieübertragung;
- **Fig. 2**: eine schematische Darstellung des Informationsaustausches zwischen einem Basis- und einem Mobilteil über einen separat bereitgestellten Informationskanal;
- **Fig. 3**: eine schematische Darstellung des Informationsaustausches zwischen Basisteil und Mobilteil über dieselbe magnetische Kopplung wie für den Energietransport selbst;
- **Fig. 4**: eine schematische Darstellung des Informationsaustausches zwischen einem Basis- und einem Mobilteil über Funk;
- **Fig. 5**: eine schematische Darstellung des prinzipiellen Aufbaus eines Systems zur induktiven Energieübertragung auf der Basis eines resonanten DC-DC-Konverters;
- **Fig. 6**: simulierte Verläufe der Ausgangsspannung eines Systems zur IE auf Basis eines LLCC-Konverters für verschiedene Abstände der Gerätehälften bei Belastung des Ausgangs mit Nennleistung als Funktion der Schaltfrequenz (durchgezogene Linie: Ausgangsspannung unter Belastung mit Nennausgangsleistung, gestrichelte Linie: Ausgangsspannung im Leerlauf);
- **Fig. 7**: simulierte Verläufe der Verlustleistung eines Systems zur IE auf Basis eines LLCC-Konverters für verschiedene Abstände der Gerätehälften bei Belastung des Ausgangs mit Nennleistung als Funktion der Schaltfrequenz;
- **Fig. 8**: simulierte Verläufe der Verlustleistung eines Systems zur IE auf Basis eines LLCC-Konverters für verschiedene Abstände der Gerätehälften bei Belastung des Ausgangs mit 20% der Nennleistung als Funktion der Schaltfrequenz;
- **Fig. 9**: eine schematische Darstellung einer zweistufigen Systemstruktur;
- **Fig. 10**: eine schematische Darstellung einer Schaltungsanordnung mit einer Nachstabilisierungsstufe basierend auf einem Linearregler;
- **Fig. 11**: eine schematische Darstellung einer Schaltungsanordnung mit einer Nachstabilisierungsstufe basierend auf einem Schaltnetzteil mit einem Buck-Konverter;
- **Fig. 12**: eine schematische Darstellung einer Schaltungsanordnung, bei welcher der Luftspalt mit Hilfe eines Flyback-Konverters überwunden wird;
- **Fig. 13**: eine schematische Darstellung einer Schaltungsanordnung, bei der der Luftspalt mit Hilfe eines Forward-Konverters überwunden wird;
- **Fig. 14**: eine schematische Darstellung einer Schaltungsanordnung, bei welcher die potentialgetrennte Stufe aus einer Batterie versorgt wird;
- **Fig. 15**: eine schematische Darstellung einer Schaltungsanordnung, bei der die potentialgetrennte Stufe mittels eines Hochsetzstellers versorgt wird;
- **Fig. 16**: eine schematische Darstellung einer Schaltungsanordnung, bei der die Eingangsspannung der potentialgetrennten Stufe mit Hilfe eines Gleichrichters aufbereitet wird;
- **Fig. 17**: eine schematische Darstellung einer Schaltungsanordnung, bei der die potentialgetrennte Stufe als "electronic transformer" zur IE betrieben wird und diese gleichzeitig den netzseitigen Leistungsfaktor anhebt;
- **Fig. 18**: eine schematische Darstellung einer Schaltungsanordnung, bei der die potentialgetrennte Stufe mittels eines resonanten LLCC-Konverters realisiert ist und die Nachstabilisierung mit Hilfe eines Buck-Konverters erfolgt;
- **Fig. 19**: eine schematische Darstellung einer Schaltungsanordnung, bei der die potentialgetrennte Stufe mittels eines resonanten LLC-Konverters und einer Mittelpunktsanzapfung auf der Sekundärseite realisiert wird und die Nachstabilisierung mit Hilfe eines Buck-Boost-Konverters erfolgt;
- **Fig. 20**: eine schematische Darstellung einer Schaltungsanordnung, bei der die potentialgetrennte Stufe mittels eines resonanten LLCC-Konverters ausgeführt ist und die Nachstabilisierung mit Hilfe eines Boost-Konverters erfolgt;
- **Fig. 21**: eine schematische Darstellung einer Schaltungsanordnung, bei der die Eingangsspannung der potentialgetrennten Stufe mit Hilfe eines Gleichrichters und eines Speicherkondensators bereitgestellt wird;
- **Fig. 22**: eine schematische Darstellung einer Schaltungsanordnung, bei der die Eingangsspannung der potentialgetrennten Stufe mit Hilfe einer passiven Leistungsfaktorkorrektur bereitgestellt wird;
- **Fig. 23**: eine schematische Darstellung einer Schaltungsanordnung gemäß einer vorteilhaften Ausführungsform der Erfindung, bei der die Eingangsspannung der potentialgetrennten Stufe mit Hilfe eines DC-DC-Konverters bereitgestellt wird;
- **Fig. 24**: eine schematische Darstellung einer Schaltungsanordnung, bei der die Eingangsspannung der potentialgetrennten Stufe mit Hilfe einer aktiven Leistungsfaktorkorrekturschaltung bereitgestellt wird.

Kerngedanke der vorliegenden Erfindung ist die Realisierung eines Systems zur IE basierend auf einem dreistufigen Konzept. Diese Herangehensweise macht die Übermittlung von Informationen zum Zwecke der Regelung der Lastspannung zwischen Primär- und Sekundärseite überflüssig. Dabei sind drei Stufen vorgesehen:
1. Stufe: Aufbereitung der Eingangsspannung (AC-DC bzw. DC-DC).
2. Stufe: Energietransport über einen Luftspalt.
3. Stufe: Nachstabilisierung.

Im folgenden werden unterschiedliche Technische Aspekte und Beispiele induktiver Energieübertragungssysteme zum besseren Verständnis der vorliegenden Erfindung, die nur durch die Ansprüche definiert ist, erläutert.

Für den Einsatz eines getakteten Netzteils zur Nachstabilisierung kommen eine Vielzahl von DC-DC-Konvertern in Frage, insbesondere sind in diesem Zusammenhang der Buck-Konverter, der Buck-Boost-Konverter, der Cuk-Konverter sowie der Boost-Konverter genannt. Es können auch galvanisch getrennte Konverter, wie der Flyback- oder Forward-Konverter, sowie lastresonante oder schalterresonante Konverter eingesetzt werden. Für sehr unempfindliche Lasten kann auch nur eine einfache Überspannungsbegrenzung vorgesehen sein.

Die Überwindung des Luftspaltes kann vorzugsweise, neben anderen bereits erwähnten Realisierungen, mit Hilfe resonanter Konverter erfolgen, wie dies in Fig. 5 gezeigt ist. Hierbei gibt es eine Vielzahl unterschiedlicher Ansätze, auf welche Weise die parasitären Eigenschaften des lose gekoppelten Transformators kompensiert werden können. Sowohl auf der Primärseite als auch auf der Sekundärseite kann eine Serien- bzw. Parallelkompensation durchgeführt werden (Kondensator). Auf der Sekundärseite kann diese Kompensation aber auch entfallen. Zusätzlich können auch noch weitere Blindelemente zur gezielten Beeinflussung der Frequenzeigenschaften des Resonanzkreises vorgesehen werden.

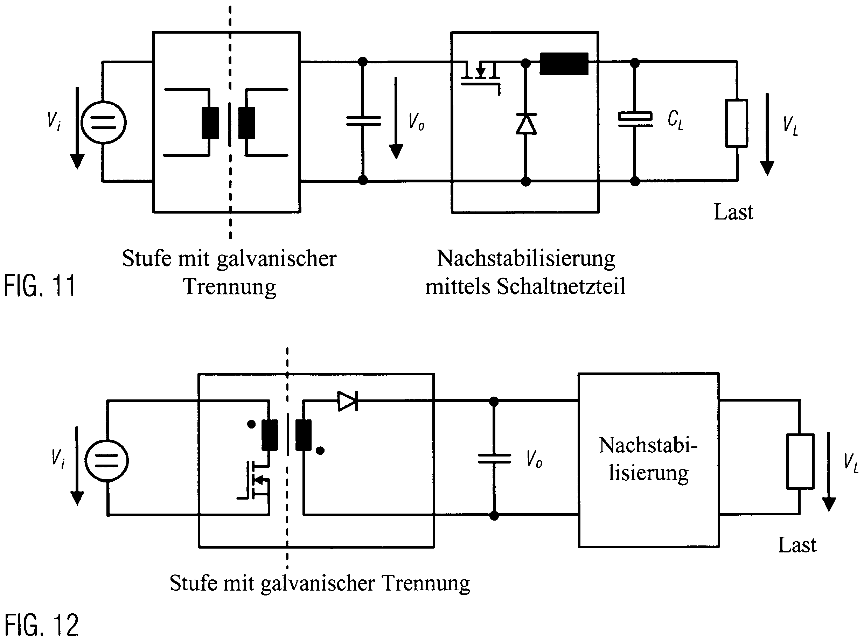

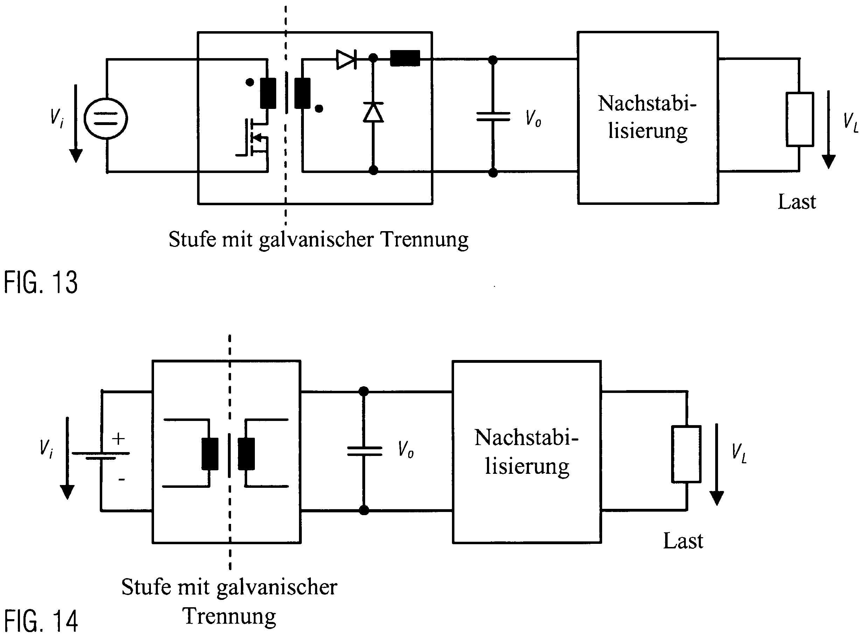

Darüber hinaus sind auch für den Fall der vergleichsweise lose gekoppelten Spulen, welche bei der IE in aller Regel auftreten, auch andere Topologien zur Überwindung des Luftspaltes denkbar. So könnte trotz der großen Streuinduktivität auch ein Flyback-Konverter (u. U. als Two-Switch-Variante) oder ein Forward-Konverter zum Einsatz kommen, wie in Fig. 12 und Fig. 13 illustriert.

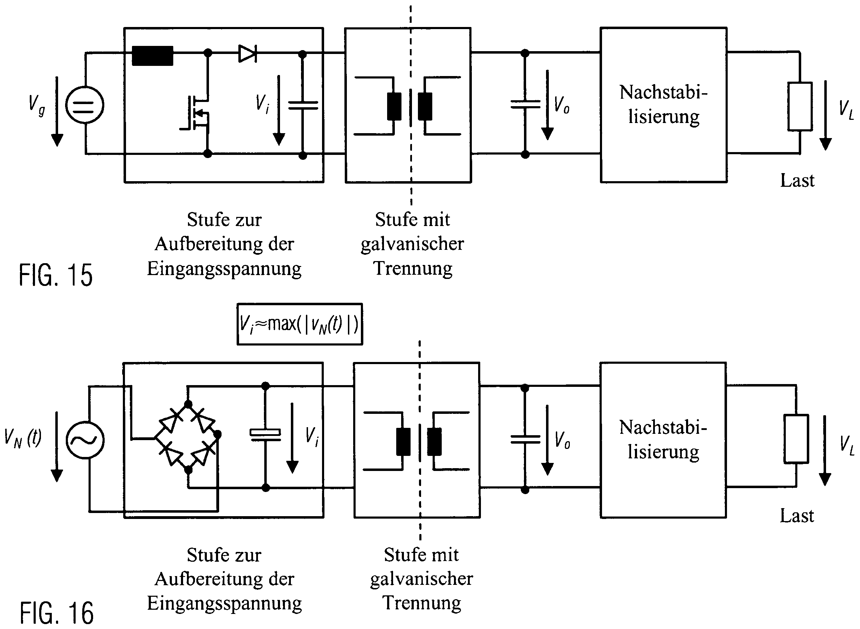

Die Erzeugung der Eingangsspannung *Vᵢ* der resonanten Stufe ist ebenfalls auf mehrere Arten möglich. Zum einen kann diese DC-Spannung direkt durch eine Batterie bzw. durch einen DC-DC-Konverter bereitgestellt werden, wie in Fig. 14 und Fig. 15 dargestellt.

Alternativ zum in Fig. 15 exemplarisch dargestellten Boost-Konverter können auch hier unterschiedliche DC-DC-Konverter zum Einsatz kommen (Buck, Buck-Boost, Flyback, Forward, Cuk etc.). Steht die Eingangsspannung *Vᵢ* als Gleichspannung systembedingt nicht von vornherein zur Verfügung, so muss diese erst aus einer anderen Quellspannung, wie in Fig. 15 illustriert, aufbereitet werden. Dementsprechend erfordert das Konzept einer zweistufigen Überwindung des Luftspalts in aller Regel eine dritte Stufe zur Aufbereitung der Eingangsspannung.

Die DC-Spannung *V_{g}* kann darüber hinaus durch eine Gleichrichtung der Netzspannung mit Hilfe eines Brückengleichrichters mit Speicherkondensator erzeugt werden.

Die Möglichkeiten aus den Fig. 15 und Fig. 16 können entsprechend kombiniert werden. Die gleichgerichtete und geglättete Netzspannung dient in diesem Fall als Eingangsspannung eines DC-DC-Wandlers, welcher die entstehende Restwelligkeit (doppelte Netzfrequenz) ausgleicht und eine stabilisierte Ausgangsspannung bereitstellt. Diese stabilisierte DC-Spannung dient wiederum der Konverterstufe zur Überwindung des Luftspaltes als Eingangsspannung. Dementsprechend können hierbei neben dem in Fig. 15 dargestellten Boost-Konverter auch beliebige andere Topologien wie z. B. der Tiefsetzsteller eingesetzt werden. Zur Verbesserung des netzseitigen Leistungsfaktors kann überdies eine passive Leistungsfaktorkorrektur vorgesehen werden (Glättungsdrossel). Zudem kann eine aktive Leistungsfaktorkorrektur erfolgen, um *Vᵢ* zu erzeugen.

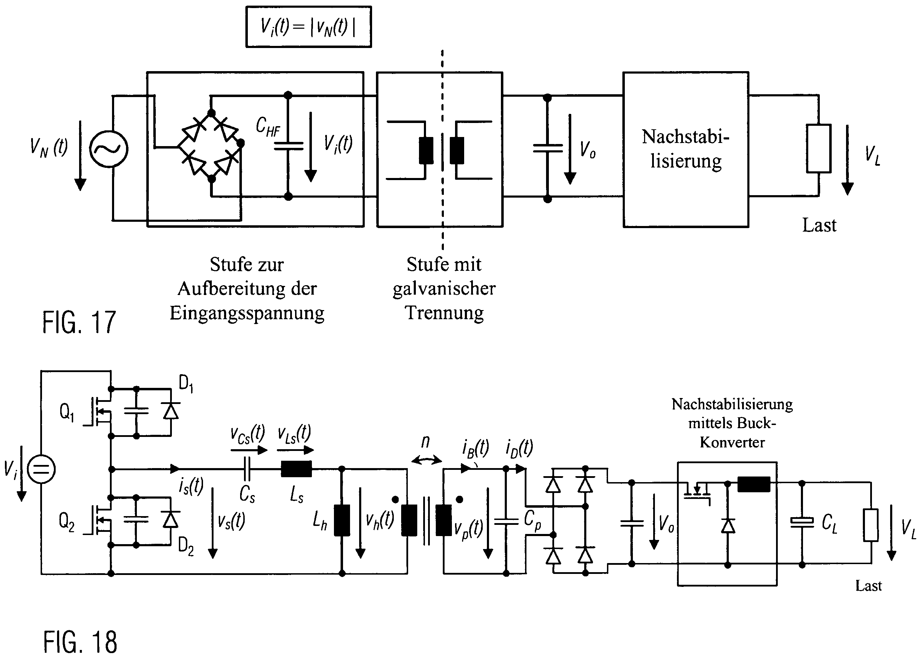

Alternativ kann die resonante Zwischenstufe auch direkt aus einem gleichgerichteten Wechselnetz versorgt werden, wie in Fig. 17 schematisch dargestellt. Diese arbeitet dann wiederum festfrequent als elektronischer Transformator und verbessert zusätzlich den netzseitigen Leistungsfaktor im Vergleich zu einer Gleichrichterbrücke in Kombination mit einem Speicherkondensator. Der dargestellte Kondensator *C_{HF}* weist einen kleinen Nennwert auf. Er kann damit im Gegensatz zu einem Speicherkondensator (Elektrolytkondensator) keine signifikante Energie zwischenspeichern, sondern dient lediglich zur Filterung der hochfrequenten Oberschwingungen des Eingangsstromes der Konverterstufe zum Überwinden des Luftspaltes. Bei diesem Ansatz entsteht zusätzlich zur abstandsbedingten Variation des DC-Werts der Ausgangsspannung ein Spannungsripple auf der Ausgangsspannung *Vₒ* mit der doppelten Netzfrequenz. Diese Restwelligkeit wird in dieser Realisierungsvariante wiederum durch die Nachstabilisierungsstufe auf der Sekundärseite ausgeglichen.

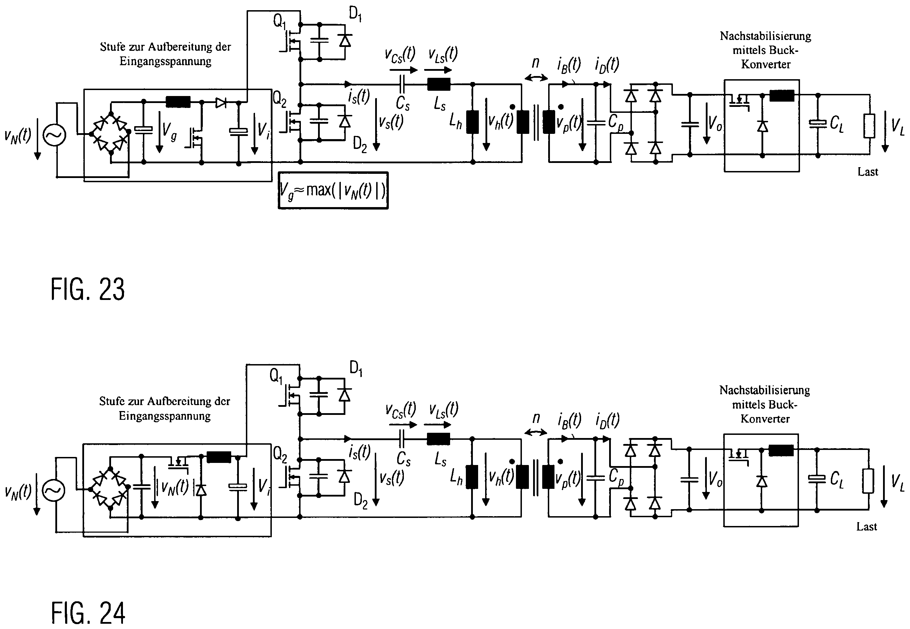

Nachfolgend werden einige beispielhafte Schaltungsanordungen im Detail und mit Bezug auf die Figuren 18 bis 22 und auf die Figur 24 erläutert. Die Figur 23 stellt eine Schaltungsanordung gemäß einer vorteilhaften Ausführungsform der Erfindung dar.

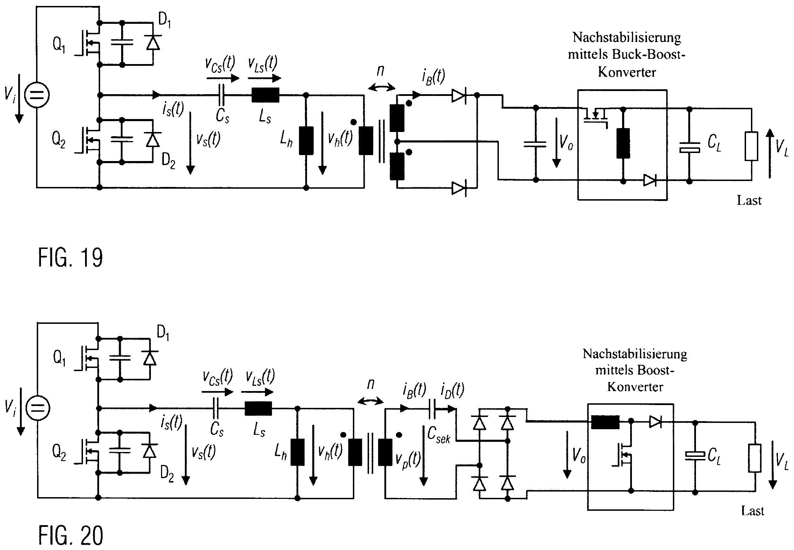

Als favorisierte Topologie zur Überwindung des Luftspaltes wurden resonante Konverter identifiziert. Bevorzugte Grundstrukturen der Resonanzkreise sind in den Fig. 18 bis Fig. 20 gezeigt. Der Aufbau des Resonanzkreises der Resonanzwandler unterscheidet sich dabei durch das Vorhandensein und die Platzierung eines Kondensators auf der Sekundärseite. Im Falle einer sekundärseitigen Parallelkompensation ist die Verwendung einer Vollbrücke zur Gleichrichtung vorteilhaft, andernfalls kann die Sekundärseite auch als Mittelanzapfung (siehe Fig. 19) ausgeführt sein, um die auftretenden Diodenverluste zu minimieren.

Die Nachstabilisierung wird in Fig. 18 durch einen Buck-Konverter realisiert. In Fig. 19 wurde exemplarisch ein Buck-Boost-Konverter als Topologie zur Nachstabilisierung gewählt. Darüber hinaus ist auch ein Hochsetzsteller, wie in Fig. 20 gezeigt, einsetzbar.

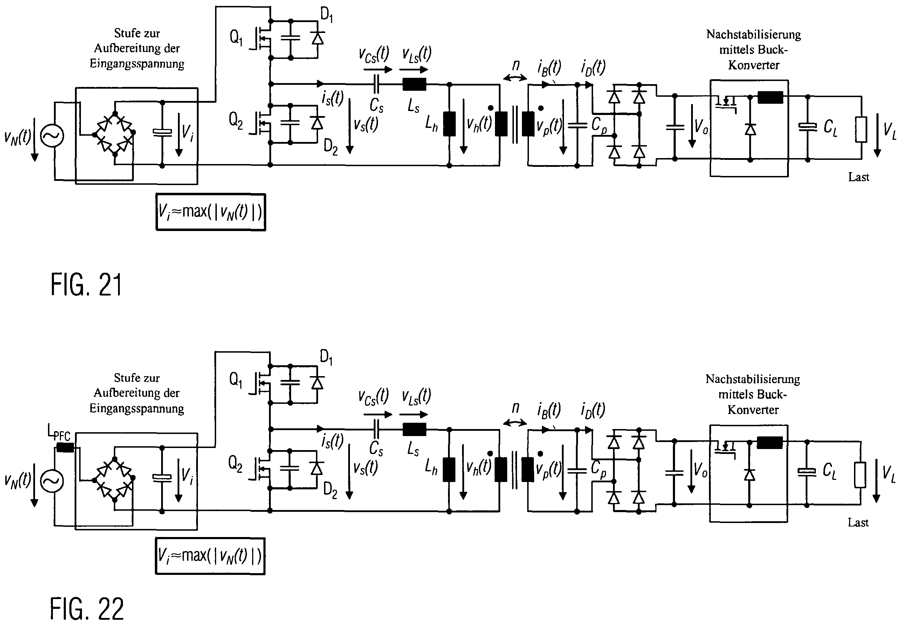

Im Hinblick auf die Aufbereitung der Eingangsspannung zeigen Fig. 21 bis Fig. 24 die favorisierten Realisierungen jeweils am Beispiel des sekundärseitig parallelkompensierten LLCC-Konverters. Die Nachstabilisierungsstufe ist exemplarisch mittels eines Buck-Konverters realisiert, es können aber, wie bereits angesprochen, verschiedene Varianten der Nachstabilisierung zum Einsatz kommen. Ebenso sind verschiedene Resonanzkreistopologien möglich.

In Fig. 21 erfolgt die Aufbereitung der eingangsseitigen Netzspannung mit Hilfe einer einfachen Gleichrichterbrücke in Verbindung mit einem Speicherkondensator. Dieser glättet die gleichgerichtete Netzspannung und lädt sich in erster Näherung auf den Spitzenwert der Netzspannung auf. Der resultierende Spannungsripple der sekundärseitigen Ausgangsspannung *Vₒ* der resonanten Stufe wird (zusätzlich zur Spannungsvariation aufgrund unterschiedlicher Positionsverhältnisse) durch die Nachstabilisierungsstufe ausgeregelt.

Zur Erhöhung des netzseitigen Leistungsfaktors kann eine passive Leistungsfaktorkorrektur (power factor correction, PFC) vorgesehen werden, wie sie in Fig. 22 schematisch dargestellt ist. Dabei werden die Nachladeimpulse durch zusätzliche Impedanzen (in aller Regel induktiv) verbreitert, wodurch die aufgenommene Verzerrungsblindleistung sinkt und der Leistungsfaktor steigt. Zur passiven PFC dient insbesondere die Glättungsdrossel L_{PFC}.

Um einen großen Wertebereich der Netzspannung abdecken zu können (Weitbereichseingang mit europäischen und außereuropäischen Nennwerten), ist eine zusätzliche Boost-Konverter wie in einer vorteilhaften Ausführungsform der Erfindung in Fig. 23 gezeigt, vorgesehen. Diese arbeitet entgegen einer aktiven Leistungsfaktorkorrekturschaltung als DC-DC-Konverter und muss dementsprechend nur für die Nennausgangsleistung dimensioniert werden.

Um den Leistungsfaktor auf der Netzseite gezielt zu hohen Werten hin zu optimieren, kann auch eine aktive Leistungsfaktorkorrektur vorgesehen werden, wie sie beispielsweise in Fig. 24 dargestellt ist. Dabei kann, wie exemplarisch gezeigt, auf einen Buck-Konverter zurückgegriffen werden, alternativ ist auch wie in Fig. 23 die Verwendung eines Boost-Konverters sowie anderer Topologien möglich.

Abschließend bleibt festzuhalten, dass die in Fig. 18 bis Fig. 24 Realisierungsmöglichkeiten inklusive der erwähnten Topologieabwandlungen nahezu beliebig kombinierbar sind.

## Patentansprüche

1. Schaltung für ein System zur kontaktlosen, induktiven Energieübertragung, wobei die Schaltung umfasst:
eine primärseitige Schaltung, die auf einer Primärseite angeordnet und mit einer primärseitigen Versorgungsspannung verbindbar ist, und eine sekundärseitige Schaltung, die auf einer Sekundärseite angeordnet und mit einer mit Energie zu versorgenden Last verbindbar ist;
eine Übertragerstufe mit galvanischer Trennung zum kontaktlosen Übertragen von Energie von der Primärseite über einen Luftspalt hinweg auf die Sekundärseite, wobei mindestens zwei magnetisch gekoppelte Spulen zur induktiven Energieübertragung vorgesehen sind, die durch Entfernen der Sekundärseite von der Primärseite räumlich voneinander trennbar sind;
wobei die Übertragerstufe einen resonanten Wandler aufweist und die sekundärseitige Schaltung weiterhin eine Nachstabilisierungsstufe umfasst,
**dadurch gekennzeichnet, dass**
die Schaltung keinen Kanal zur Rückführung einer Information über eine Ausgangsspannung der Übertragerstufe an die Primärseite vorsieht,
wobei die Schaltung so ausgestaltet ist, dass die Ausgangsspannung der Übertragerstufe bei Schwankungen der zu versorgenden Last, der Versorgungsspannung und/oder eines Abstandes zwischen Primärseite und Sekundärseite innerhalb eines vorbestimmten Wertebereichs gehalten wird, und
wobei die Nachstabilisierungsstufe einen Buck-Konverter umfasst, und die Übertragerstufe von einem festfrequent betriebenen LLC- oder LLCC-Konverter gebildet ist, welcher auf der Primärseite von einem Boost-Konverter, entweder als AC-DC-Konverter oder als DC-DC-Konverter, versorgt wird.

2. Schaltung nach Anspruch 1, wobei der resonante Wandler so betrieben wird, dass sich ein Tastgrad der Übertragerstufe in Abhängigkeit von mindestens einer elektrischen Größe der Primärseite ändert.

3. Schaltung nach einem der vorhergehenden Ansprüche, wobei die Nachstabilisierungsstufe so ausgebildet ist, dass sie einen Laststrom und/oder eine Lastspannung begrenzt.

4. Schaltung nach einem der vorangehenden Ansprüche, wobei die primärseitige Schaltung eine Aufbereitungsstufe zur Aufbereitung der Versorgungsspannung in Form einer Diodenbrücke aufweist.

5. Schaltung nach Anspruch 4, wobei die primärseitige Aufbereitungsstufe eine Gleichrichterbrücke und einen parallel zu einer Ausgangsspannung der Gleichrichterbrücke geschalteten Speicherkondensator umfasst, wobei eine Glättungsdrossel zur Anhebung des Leistungsfaktors vorgesehen ist.

6. Schaltung nach einem der vorangehenden Ansprüche, wobei die primärseitige Schaltung in einem Basisteil integrierbar ist und die sekundärseitige Schaltung in ein Mobilteil integrierbar ist.

7. Ladeschaltung nach einem der vorangehenden Ansprüche, die angepasst ist, mindestens einen wiederaufladbaren Akkumulator zu laden.

## Claims

1. A circuit for a system for contactless inductive energy transfer, wherein the circuit comprises:
a primary side circuit being arranged on the primary side that can be connected to a supply voltage on the primary side, and a secondary side circuit being arranged on the secondary side that can be connected to a load which is to be supplied with energy;
a transformer stage with galvanic separation for contactless transfer of energy from the primary side to the secondary side via an air gap, wherein at least two magnetically coupled inductors for inductive energy transfer are provided which are spatially separable from one another by removing the secondary side from the primary side;
wherein the transformer stage comprises a resonant converter and the secondary side circuit further comprises a subsequent stabilising stage,
**characterized in that**
the circuit does not provide a channel for feeding back information about an output voltage of the transformer stage to the primary side,
wherein the circuit is formed such that the output voltage of the transformer stage is maintained in a predetermined value range in case of variations of the load to be supplied, of the supply voltage and/or a distance between the primary side and the secondary side, and
wherein the subsequent stabilising stage comprises a Buck-converter and the transformer stage being formed by an LLC- or LLCC-converter operated at a fixed frequency, the fixed frequency operated converter being supplied by a Boost-converter, the Boost-converter being either an AC-DC-converter or a DC-DC-converter.

2. The circuit according to claim 1, wherein the resonant converter is operated such that a duty factor of the transformer stage changes dependent on at least one electric property of the primary side.

3. The circuit according to one of the preceding claims, wherein the subsequent stabilisation stage is formed such that it can limit a load current and/or a load voltage.

4. The circuit according to one of the preceding claims, wherein the primary side circuit comprises a pre-processing stage in form of a diode bridge for pre-processing of the supply-voltage.

5. The circuit according to claim 4, wherein the primary side pre-processing stage comprises a rectifier bridge and storage capacitor being parallel-connected to an output voltage of the rectifier bridge, wherein a smoothening inductor for raising the power factor is provided.

6. The circuit according to one of the preceding claims, wherein the primary side circuit is integrable in a base part and the secondary side circuit is integrable in a mobile part.

7. The circuit according to one of the preceding claims, adapted to charge at least one rechargeable accumulator.

## Revendications

1. Circuit pour un système de transfert d'énergie sans contact et inductif, le circuit comprenant :
un circuit primaire, qui est agencé sur un côté primaire et peut être relié à une tension d'alimentation primaire, et un circuit secondaire, qui est agencé sur un côté secondaire et peut être relié à une charge devant être alimentée en énergie ;
un étage de transfert avec isolation galvanique, pour le transfert sans contact d'énergie à partir du côté primaire vers le côté secondaire par l'intermédiaire d'un entrefer d'air, au moins deux bobines couplées magnétiquement étant prévues pour le transfert d'énergie inductif, et pouvant être séparées spatialement en éloignant le côté secondaire du côté primaire ;
circuit
dans lequel l'étage de transfert présente un convertisseur résonnant et le circuit secondaire comprend par ailleurs un étage de stabilisation postérieure,
**caractérisé en ce que**
le circuit ne prévoit pas de canal de rétroaction pour le retour d'une information concernant une tension de sortie de l'étage de transfert, vers le côté primaire,
le circuit étant configuré de manière telle, que la tension de sortie de l'étage de transfert soit maintenue à l'intérieur d'une plage de valeur prédéterminée lors de variations relatives à la charge à alimenter, à la tension d'alimentation et/ou à une distance d'espacement entre le côté primaire et le côté secondaire, et
l'étage de stabilisation postérieure comprenant un convertisseur Buck (hacheur-série), et l'étage de transfert étant formé par convertisseur LLC ou LLCC fonctionnant à fréquence fixe, qui est alimenté sur le côté primaire par un convertisseur-Boost, soit en tant que convertisseur AC-DC, soit en tant que convertisseur DC-DC.

2. Circuit selon la revendication 1, dans lequel on fait fonctionner le convertisseur résonnant de manière telle, qu'un taux de cycle de l'étage de transfert varie en fonction d'au moins une grandeur électrique du côté primaire.

3. Circuit selon l'une des revendications précédentes, dans lequel l'étage de stabilisation postérieure est configuré de manière à limiter un courant de la charge et/ou une tension de la charge.

4. Circuit selon l'une des revendications précédentes, dans lequel le circuit primaire présente un étage de traitement préalable pour préparer la tension d'alimentation, sous la forme d'un pont de diodes.

5. Circuit selon la revendication 4, dans lequel l'étage de traitement préalable, du côté primaire, comprend un pont redresseur et un condensateur de stockage monté en parallèle à une tension de sortie du pont redresseur, une self de lissage étant prévue pour augmenter le facteur de puissance.

6. Circuit selon l'une des revendications précédentes, dans lequel le circuit primaire peut être intégré à une base et le circuit secondaire peut être intégré à une partie mobile.

7. Circuit de charge selon l'une des revendications précédentes, qui est adapté à assurer la charge d'au moins un accumulateur rechargeable.
